# EUROPÄISCHE PATENTANMELDUNG

(11) **EP 2 312 131 A2**
(43) Veröffentlichungstag der Anmeldung: **20.04.2011**
(21) Anmeldenummer: 09012883.6
(22) Anmeldetag: 12.10.2009
(51) Int. Cl.: F01K 27/00, F01K 25/10, F03G 7/06, F01K 25/02

(54) **Method zur Konvertierung von thermischer Energie in mechanische Arbeit**

(71) Anmelder: Schlagregen, Bernd, 25782 Tellingstedt- OT Rederstall (DE)
(72) Erfinder: Schlagregen, Bernd, 25782 Tellingstedt- OT Rederstall (DE)

(57) **Zusammenfassung**

**1.1 Technische Voraussetzungen**

**1.1.1 Aufbau der Reaktoren**

Zum Einsatz kommen ein oder mehrere Reaktionsbehälter für einen Betriebsdruck von min. **1bar** bis ca. **330bar** abs., die physikalisch in ihren Eigenschaften als Blasen,- oder Kolbenspeichers ausgebildet sind und handelsüblich auch z.B. bei Windkraftanlagen eingesetzt werden. Die Speicher werden durch deren physikalischen Aufbau mit deren großen gesamten zylindrischen Raum mit entweder einer sogenannten "Blase" (Blasenspeicher) oder auch eines metallenen Kolbens (Kolbenspeicher) in 2 Teile geteilt, um dadurch 2 unterschiedlichen Arbeitsmedien jeweils einen eigenen Arbeitsraum zu gewähren (Kammer "**P1**" & "**P2**"). Bei den sogenannten Blasenspeichern werden elastomeren Blasen als trennende Wandung zwischen den beiden Medien benutzt, während bei den Kolbenspeichern ein metallener zylindrischer frei beweglicher und mehrfach abgedichteter Kolben die beiden Medien voneinander trennt. Durch den frei laufenden Kolben bleibt jederzeit das Arbeitsmedium in den beiden Kammern getrennt. Die 1. Kammer "**P1**" nimmt in allen Varianten des Reaktionsbehälters das hydraulische Medium auf, während das Arbeitsmedium in allen Varianten der Reaktionsbehälter in der 2. Kammer "**P2**" aufgenommen wird. Diese Regel gilt für Kolben- sowie Blasenspeicher gleichermaßen.

**2.1 Kurzbeschreibung**

Bei diesem Patent findet eine "Wandlung von thermischer Energie in mechanische Arbeit" statt, die anschließend in elektrische Energie gewandelt wird. Dabei wird das Verdrängerprinzip ähnlich wie im Zylinderraum beim Motorenbau angewendet.

Alle Reaktionsbehälter stehen senkrecht geführt bis zur Arbeitsposition der Kolben im Thermalbad, z.B. Wasser oder Thermalöl. Durch eine ersatzweise Doppelbemantelung der Reaktionsbehälter kann die Einbaulage (senkrecht/horizontal) variieren. Dadurch wird die 2. Kammer "**P2**" bis zum Kolben im angeheizten Thermalbad ständig mit frischer Wärmeenergie versorgt. Das Thermalbad wird auf eine möglichst konstante Temperatur zwischen -12°C und +478°C gehalten. In Ergänzung zum gemeinsamen Thermalbad werden die Reaktionsbehälter können die Reaktoren auch vorzugshalber in Einzelwärmebehälter gestellt oder gelegt werden, die mit entsprechender thermischer Leistung durchströmt werden.

Bei diesem Patent wird Kältemittel bzw. Triebmittel jeglicher Art (weiterhin als Arbeitsmedium bezeichnet) in den geschlossenen Raum der 2. Kammer "**P2**" gegeben, und durch externe Zufuhr von thermischer Leistung (Wärmekapazität in bestimmtem Volumen unter anstehender Temperatur) erhitzt. Um die Position des trennenden Kolbens in jedem der Reaktionsbehälter mit Hilfe der Anlagensteuerung den Füllstand überwachen zu können, wird ein Sensor zur Positionsmeldung des Kolbens von **AUSSEN** am Reaktionsbehälter angebracht. Um eine langwierige Rüstzeit der 2. Kammer "**P2**" zu verkürzen, wird eine sogenannte **"Selbsteinspritzung"** angewendet. Dazu wird vorzugshalber ein Reaktionsbehälter mit einem frei beweglichen Kolben so eingesetzt, daß in dessen 2. Kammer ständig **N₂** (Stickstoff) 1 bis zu 120 bar abs., je nach Leistungsgröße und Arbeitsmedium, das Arbeitsmedium in die 2. Kammer "**P2**" einbringt.

Durch die Einwirkung der thermischen Leistung erreicht das Arbeitsmedium die Sublimation (von lat. *sublimis* = ,hoch in der Luft befindlich', 'erhaben' und bezeichnet in der Thermodynamik den Prozeß des unmittelbaren Übergangs eines Stoffes vom festen in den gasförmigen Aggregatzustand), und verdampft ab einem spezifischem Temperaturniveau des Arbeitsmittels. Nach Überschreitung der Sublimation wird bei weiterer thermischer Leistungszufuhr ein fortschreitender Arbeitsdruck in der 2. Kammer "**P2**" aufgebaut, da sich das Arbeitsmedium weiter ausdehnt, das Volumen der 2. Kammer "**P2**" aber konstant bleibt. Dieser Arbeitsdruck in der 2. Kammer "**P2**" überträgt sich direkt über einen Kolben, der zur Trennung von zwei unterschiedlichen Medien eingesetzt wird, auf das hydraulische Medium auf der anderen Seite des Kolbens auf die 1. Kammer "**P1**". Nach Entspannung der hydraulischen Seite wird mit Hilfe der hydraulischen Verdrängung unter hohem Arbeitsdruck ein für die Anwendung ausgelegter hydraulischer Antrieb betrieben, an den ein Generator direkt angedockt ist um Strom zu erzeugen. Die Steuerung ist in der Lage, an Hand der festgestellten thermischen Eingangsleistung die Anzahl der Reaktionsbehälter selbst zu bestimmen, die in die Arbeitszyklen auf Basis der tatsächlichen thermischen Eingangsleistung einbezogen werden können.

**3.1 Arbeitsmedium**

Als Arbeitsmedium kann wahlweise **R410A, CO₂** oder ein nach eigenen Erkenntnissen gewonnenes Arbeitsmedium eingesetzt werden (Beschreibung des Arbeitsmediums siehe weiter unten). Das Arbeitsmediums **R410A** zeichnet sich durch seine Untrennbarkeit seiner beiden Komponenten aus. Das Gemisch besteht aus 50% **R32** (Difluormethan) und 50% **R125** (Pentafluorethan), und bildet dadurch ein nahezu azeotropes Kältemittelgemisch. Mit azeotrop bezeichnet man ein Stoffgemisch, das sich nicht durch gewöhnliche Destillation trennen läßt und identische Stoffeigenschaften im flüssigen wie auch im gasförmigen Zustand aufweist.

**1.1.2 Arbeitsmedium nach eigenen Erkenntnissen**

Das nach eigenen Erkenntnissen gewonnene Arbeitsmedium setzt sich aus folgenden Komponenten zusammen:
• ∼ 5 Vol-% Methanol
• ∼12 Vol-% Video 90
• ∼75 Vol-% R410A
• ∼ 8 Vol-% NH₃

Die Clusterbildung spielt bei dieser Mischung eine entscheidende Rolle, sodaß sich diese Flüssigkeit, wenn sie verdampft, nicht mehr wie ein ideales Gas verhält. Ähnlich wie beim Wasser mit seinen beiden **+104,5°C** angeordneten Wasserstoffatomen am Sauerstoffatom, müßte Wasser theoretisch nicht flüssig, sondern gasförmig sein. Clusterbildung von Molekülen verhindert das Verdichten erheblich. Aus diesem Grund ist Wasser auch fast nicht komprimierbar und besitzt einen gewissen Schubstangeneffekt. Ebenfalls wie auch bei Wasserdampf. Begrenzt man dann noch das Domvolumen auf ein Minimum, verliert der theoretische Wert der Enthalpie dieser Mischung seine Gültigkeit, und es sind Anomalien feststellbar, die empirisch und stabilisiert in der Praxis eingebracht werden können.

## Beschreibung

### 1 Allgemeines

Beim dieser Einreichung zum Patent handelt es sich um eine Methode, bei der eine "Wandlung von thermischer Energie in mechanische Arbeit" stattfindet, die anschließend in elektrische Energie gewandelt wird. Bei dieser Methode wird das Verdrängerprinzip ähnlich wie in den Zylindern beim Motorenbau zum Einsatz gebracht.

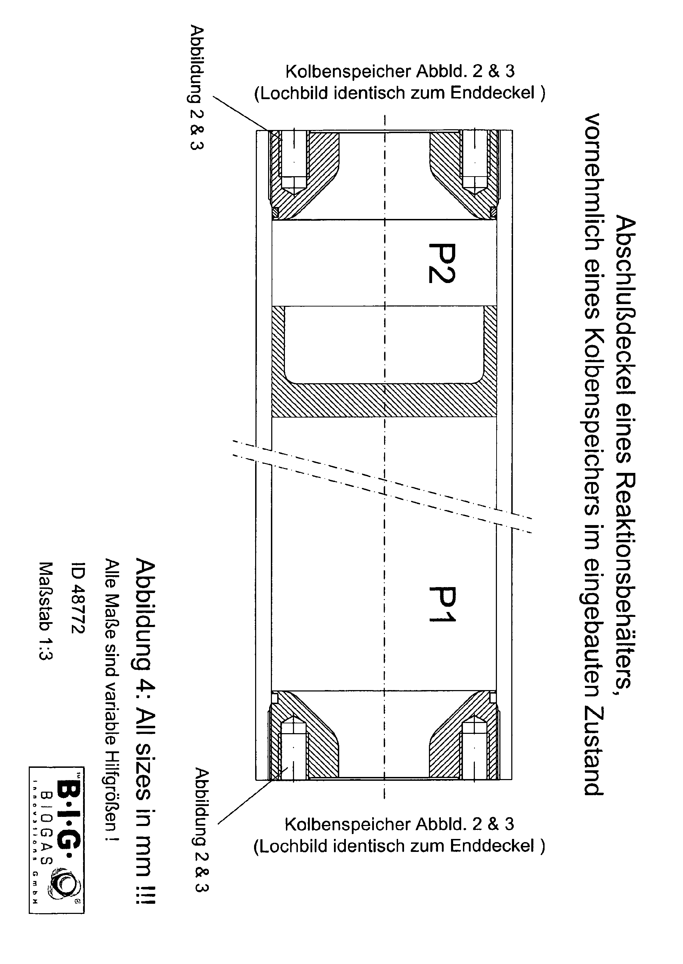

Bei dieser angewandten Methode wird Kältemittel bzw. Triebmittel (weiterhin als Arbeitsmedium bezeichnet) in einen geschlossenen Raum gegeben und durch thermische Leistung (Wärmeträgervolumen unter anstehender Temperatur) erhitzt. Durch die thermische Leistung erreicht das Arbeitsmedium die Sublimation (von lat. *sublimis* = 'hoch in der Luft befindlich', 'erhaben' und bezeichnet in der Thermodynamik den Prozeß des unmittelbaren Übergangs eines Stoffes vom festen in den gasförmigen Aggregatzustand) und verdampft dabei ab einem bestimmten Temperaturniveau. Nach der Sublimation wird bei weiterer Leistungszufuhr ein Arbeitsdruck im Arbeitsraum **"P1"** aufgebaut, da das Arbeitsmedium sich ausdehnt, der Arbeitsraum **"P2"** aber konstant bleibt. Dieser Arbeitsdruck in Arbeitsraum **"P2"** überträgt sich indirekt über einen Kolben, der zur Trennung von zwei unterschiedlichen Medien eingesetzt wird, auf das hydraulische Medium auf der anderen Seite des Kolbens (siehe Abbildung 4). Mit Hilfe der hydraulischen Verdrängung unter hohem Arbeitsdruck wird ein für die Anwendung ausgelegter hydraulischer Antrieb betrieben, an den ein Generator direkt angedockt ist.

Bei allen Bauteilgruppen wie z.B. Armaturen, hydraulischer Antrieb (z.B. Pelton Turbine entspricht einem Wasserturbinenantrieb), sowie Steuerung und Synchronisierung der Netzeinspeisung handelt es sich industrielle Serienprodukte ohne spezielle Anpassung an diese Anwendung. Alle verwendeten Bauteile sind bereits mit Prüfzeichen und Abnahmen wie z.B. CE, TÜV bzw. TRD Abnahmen o. ä. versehen, und enthalten standardmäßig angewandte Bauteile aus dem industriellen Bereich. Die Umsetzung von thermischer Energie in elektrische Energie ist daher jederzeit nachvollziehbar und somit jederzeit wiederholbar.

Als Arbeitsmedium kann wahlweise **R410A, CO₂** oder ein nach eigenen Erkenntnissen gewonnenes Arbeitsmedium eingesetzt werden (Beschreibung des Arbeitsmediums siehe weiter unten). Die eingesetzten Arbeitsmedien werden als ein wichtiger Faktor zum Druckaufbau in der 2. Kammer **"P2"** des Reaktionsbehälters benötigt. Diesen Arbeitsmedien kommt eine zentrale Stellung zu. Alle eingesetzten Arbeitsmedien zeichnen sich durch besondere Eckdaten, wie z.B. die Eigenschaft des R410A, das sich mit seiner Untrennbarkeit der beiden Komponenten hervorhebt, aus. Das Gemisch besteht aus je 50% **R32** (Difluormethan) und **R125** (Pentafluorethan) und bildet dadurch ein nahezu azeotropes Kältemittelgemisch. Mit azeotrop bezeichnet man ein Stoffgemisch, das man nicht durch gewöhnliche Destillation trennen kann und identische Stoffeigenschaften im flüssigen wie auch im gasförmigen Zustand aufweist. Durch diese Stoffeigenschaften wird verhindert, daß eine unausgewogene Reaktionskette ausgelöst wird, die das Gesamtverhalten im Arbeitsraum **"P2"** in Frage stellen könnte.

Ein höherer Arbeitsdruck im Arbeitsraum **"P2"** bewirkt, daß im hydraulischen Kreislauf stärkere Drehmomente an der Welle des Generators zugelassen werden können. Mit Hilfe eines höheren Arbeitsdruckes lassen sich bei einer fixen Nennweite in den Rohrweiten höhere Durchsatzmengen erzielen und transportieren. Durch den höheren Arbeitsdruck können mit der Hydraulik stärkere Drehmomente an der Welle des Generators bewegt werden, und als Folge daraus können größere Generatoren mit höheren Leistungen eingesetzt werden. Der anstehende Arbeitsdruckes bestimmt demnach direkt den Wirkungsgrad zwischen thermischer Eingangsleistung und elektrischer Ausgangsleistung.

### 2 Technische Vorstellung

### 2.1 Allgemeine technische Beschreibungen

Bei dieser beschriebenen Methode wird thermische Energie in Form von z.B. Heißwasser oder Thermalöl angeliefert und in ein thermales Medium transferiert, das ein Temperaturniveau, ausgehend vom Arbeitsmedium, von mindestens **-12°C** haben muß. Eine zentrale Rolle spielen die zirkulierende thermische Leistung und der physikalische Aufbau der Reaktionsbehälter, in denen der Arbeitsdruck aufgebaut wird.

Der Weg von der Anlieferung der thermischen Energie bis zur Abgabe von elektrischer Energie kann grundsätzlich in mehrere Funktionskreise zerlegt, und jeder Funktionskreis für sich alleine lauffähig dargestellt werden. Die Funktionskreise teilen sich wie folgt auf:
■ der Einsatz eines oder mehrerer Reaktionsbehälter, die sowohl autark als auch im Verbund miteinander arbeiten
■ den **Wärmekreislauf** ausgehend von einer Wärmequelle bis zur Übergabe an die Station zur Abgabe der thermischen Leistung bei Arbeitstemperaturen von -12°C bis +478°C, vorzugshalber zwischen +80°C und +98°C
■ die **Einspritzung** des Arbeitsmediums, um **z.B. R410A, CO2** oder ein nach eigenen Erkenntnissen gewonnenes Arbeitsmedium in verflüssigtem Zustand in die 2. Kammer **"P2"** des/der Reaktionsbehälter(s) einzubringen
■ die Begrenzung und Überwachung der Einfüllmengen in die beiden Kammern **"P1"** & **"P2"** mit einem oder mehreren induktiven Sensoren (vorzugshalber mit Ultraschall oder induktiv). Die Sensoren werden von außen auf den Reaktionsbehälter montiert und positioniert. Sie ertasten die Kolbenstellung und begrenzen den Kolbenweg in direkter Verbindung mit der Kolbenstellung des Reaktionsbehälters. Die Sensoren können einzeln oder zu mehreren auf dem gleichen Reaktionsbehälter angebracht, und einzeln oder zusammen angesteuert werden. Der Einsatz von Sensoren außen an Behältern wird in der Industrie bereits seit länger Zeit serienmäßig eingesetzt
■ der Einsatz von thermischer Leistung für den indirekten Kontakt durch die Druckbehälterwandung mit dem Arbeitsmittel. Eingesetzt werden dabei Temperatur und Volumenströme (thermische Leistung) zur Stabilisierung des Prozesses an der 2. Kammer **"P2"** des Reaktionsbehälters.
■ der Arbeitsdruck und die Fließgeschwindigkeit des hydraulischen Mediums wandeln mit Hilfe des hydraulischen Antriebes, z.B. einer **Turbine** (z.B. Pelton Turbine) bzw. z.B. einem **hydraulischen Motor,** in **drehende** mechanische Bewegung
■ die Wandlung **drehender mechanischer Bewegung** mit Hilfe einer direkt adaptierten **Turbine** bzw. adaptierten hydraulischen **Generators** in elektrische Energie
■ der Einsatz des **Arbeitsmittels z.B. R410A** oder **CO2** bzw. ein nach eigenen Erkenntnissen gewonnenes Arbeitsmittel sowie der Regenerierung des Arbeitsmediums in einen flüssigen Zustand
■ Umlaufpumpung des Arbeitsmediums mit Hilfe eines Kältekompressors zur kontinuierlichen Temperierung des Kältemittels per Expansionskälte im flüssigen Zustand

### 2.2 Reaktionsbehälter

Zur Erzeugung von Arbeitsdruck werden Reaktionsbehälter, so wie diese handelsüblich in der Industrie produziert und genutzt werden, als Reaktoren eingesetzt.

Grundsätzlich werden Reaktionsbehälter mit einem zul. Betriebsdruck von **1bar** bis **330bar** abs. als Reaktoren zur Druckerzeugung, Druckunterstützung und Selbsteinspritzung eingesetzt. Der Reaktionsbehälter, hier vorzugshalber Kolbenspeichers, besteht aus einem Druckrohr, das je nach Anwendungsfall für einen Betriebsdruck von min. **1bar** bis ca. **330bar** abs. ausgelegt und mit Prüfzeichen und Zertifikaten für den Dauerbetrieb versehen ist.

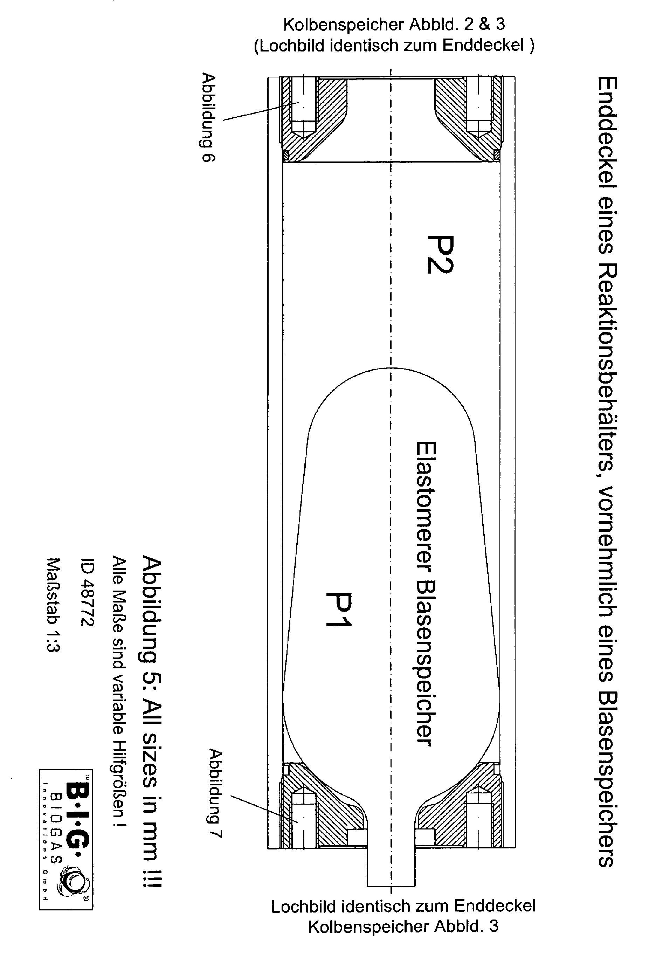

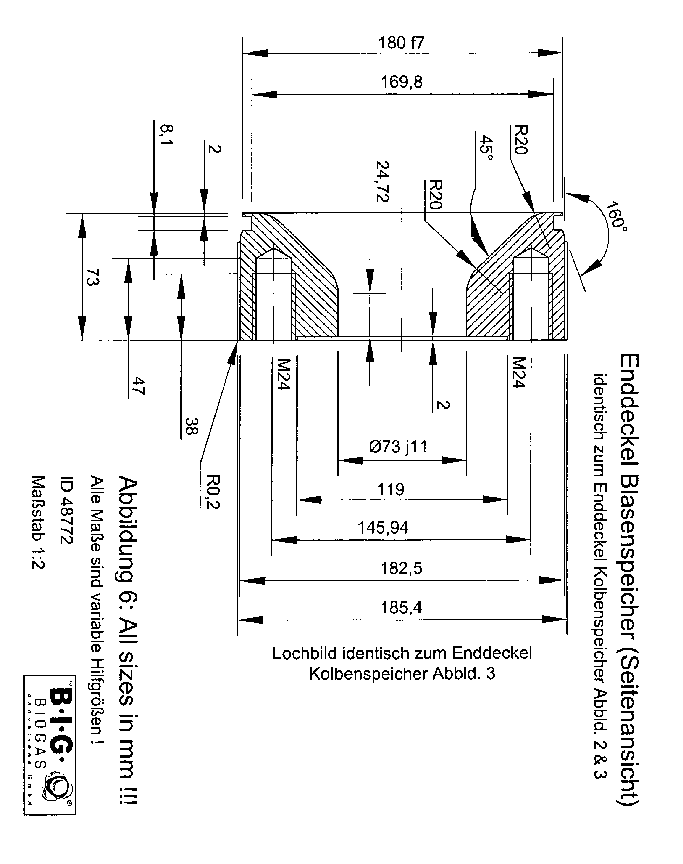

Zum Einsatz kommen ein oder mehrere Reaktionsbehälter, die in ihren Eigenschaften physikalisch als Blasen,- oder Kolbenspeichers ausgebildet sind, und die durch deren physikalischen Aufbau einen großen zylindrischen Raum mit entweder einer sogenannten "Blase" (Blasenspeicher) oder auch eines metallenen Kolbens (Kolbenspeicher) in 2 Teile teilt, um dadurch 2 unterschiedlichen Arbeitsmedien jeweils einen eigenen Arbeitsraum zu gewähren. Bei den sogenannten Blasenspeichern werden elastomere Blasen als trennende Wandung zwischen den beiden Medien benutzt (siehe Abbildung 5), während bei den Kolbenspeichern ein metallener zylindrischer frei beweglicher und mehrfach abgedichteter Kolben die beiden Medien voneinander trennt (siehe Abbildung 4).

Im Reaktionsbehälter, vornehmlich Kolbenspeicher befindet sich ein freilaufender **"Kolben"** auf Metallbasis (siehe Abbildung 4), der die Trennung zweier unterschiedlicher Medien sicherstellt. Die Führung des Kolbens erfolgt durch eine überzogene Kolbenhöhe, die mit 2 Kolbenabstreifringen und einer zusätzlichen elastomeren Dichtung zur Medientrennung aus geeignetem Dichtungsmaterial je nach Arbeitsmedium und hydraulischem Medium, angepaßt werden. Durch den freilaufenden Kolben und den Kolbenringen bleibt jederzeit das Arbeitsmedium in den beiden Kammern getrennt. Die 1. Kammer **"P1"** nimmt in allen Varianten des Reaktionsbehälters das hydraulische Medium auf, während das Arbeitsmedium in allen Varianten der Reaktionsbehälter in der 2. Kammer **"P2"** aufgenommen wird. Diese Regel gilt für Kolben- sowie Blasenspeicher (siehe Abbildung 4 & 5).

Durch die von außen an die 2. Kammer **"P2"** des Reaktionsbehälters zugeführte thermische Leistung wird die Wärme an das Arbeitsmedium in Arbeitskammer "P2" weitergeleitet. Dadurch wird durch Ausdehnung des Arbeitsmediums, z.B. **R410A** oder **CO₂** bzw. ein nach eigenen Erkenntnissen gewonnenes Kälte- Triebmittel im Arbeitsraum **"P2"** in Arbeitsdruck gewandelt. Der Unterschied zwischen den eingesetzten Arbeitsmedien besteht darin, daß z.B. das Arbeitsmedium **R410A** bei ca. **+66°C** ca. 42bar abs. erzeugt, und das als Arbeitsmedium eingesetzte **CO₂** bereits bei ca. **+30°C** ca. 70bar abs. aufbaut. Das nach eigenen Erkenntnissen gewonnene Arbeitsmedium entwickelt nach bisherigen Erkenntnissen bei ca. **+50°C** ca. **250**bar abs., sodaß der Wirkungsgrad der Anlage massiv durch den Arbeitsdruck beeinflußt wird.

### 2.2.1 Aufbau der Kolbenspeicher

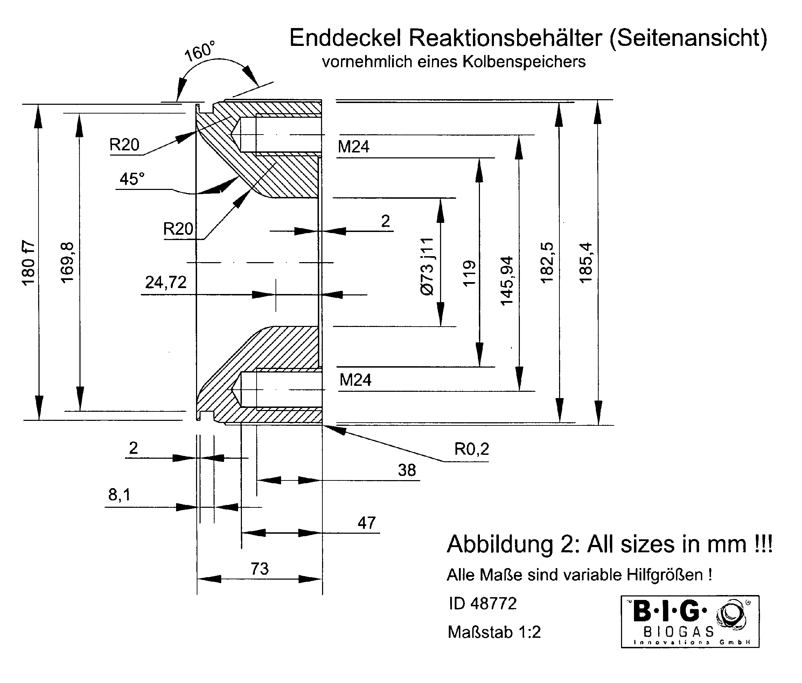

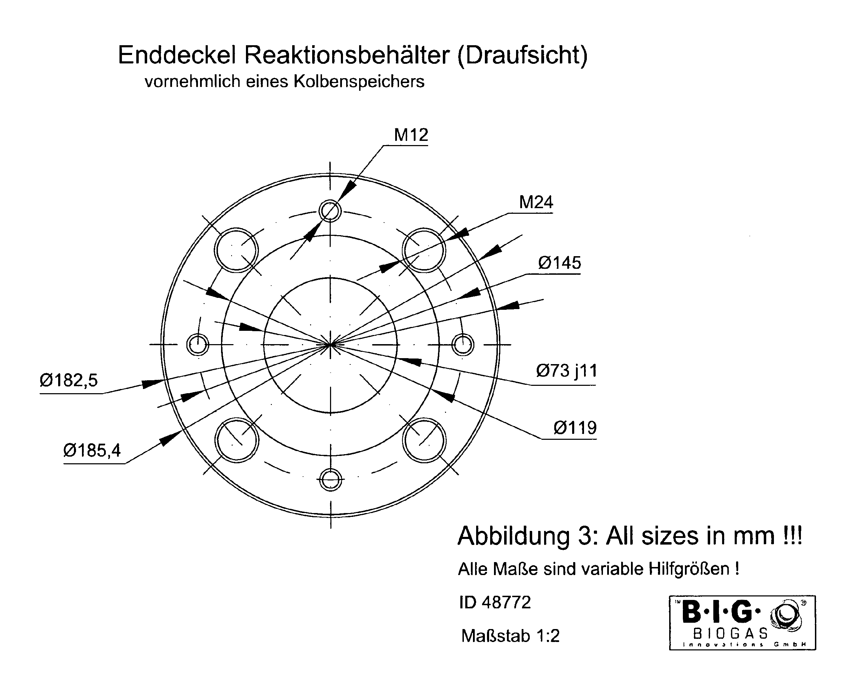

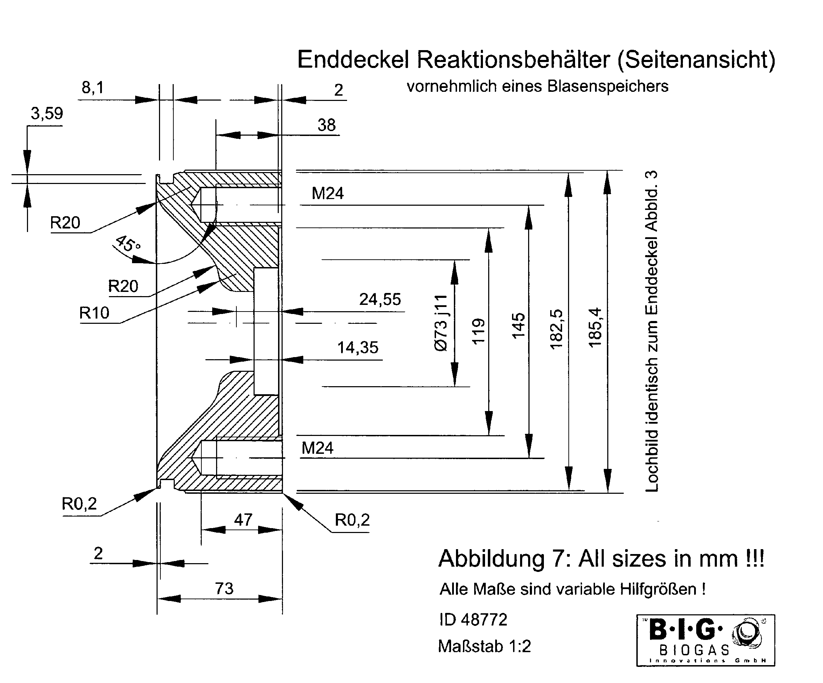

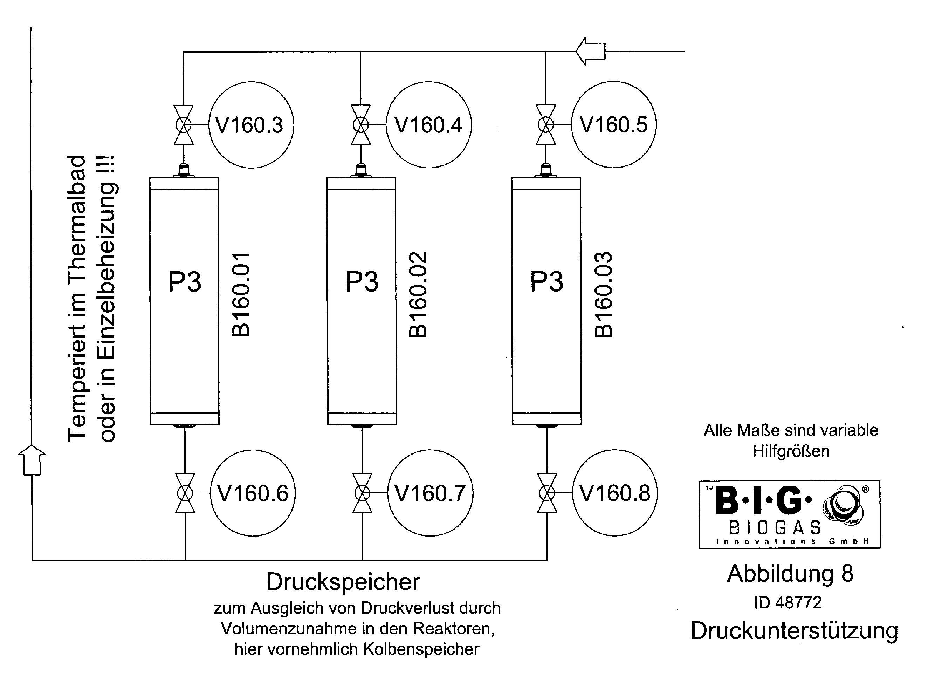

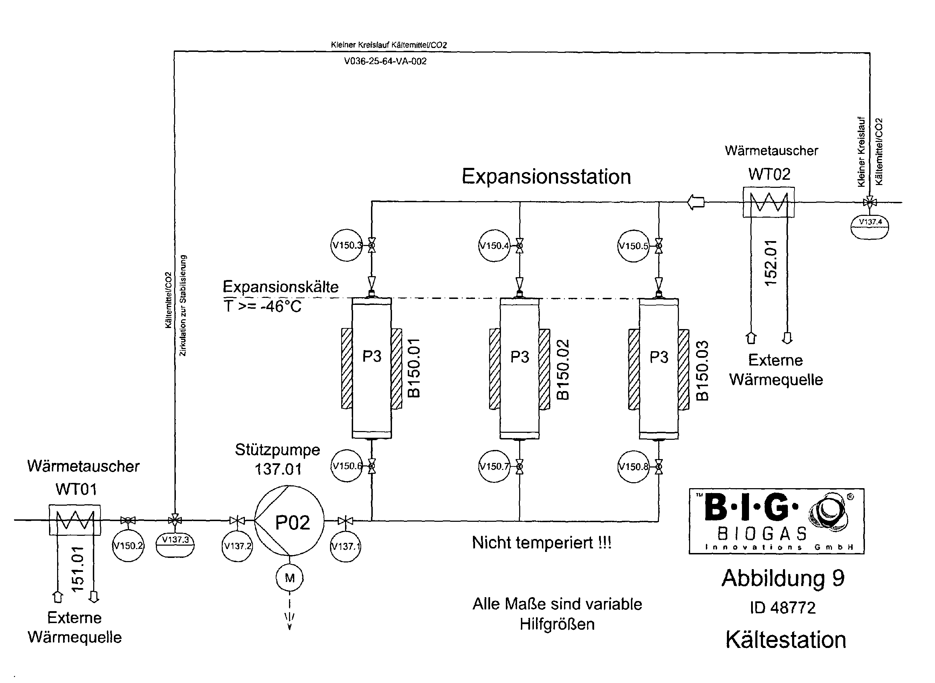

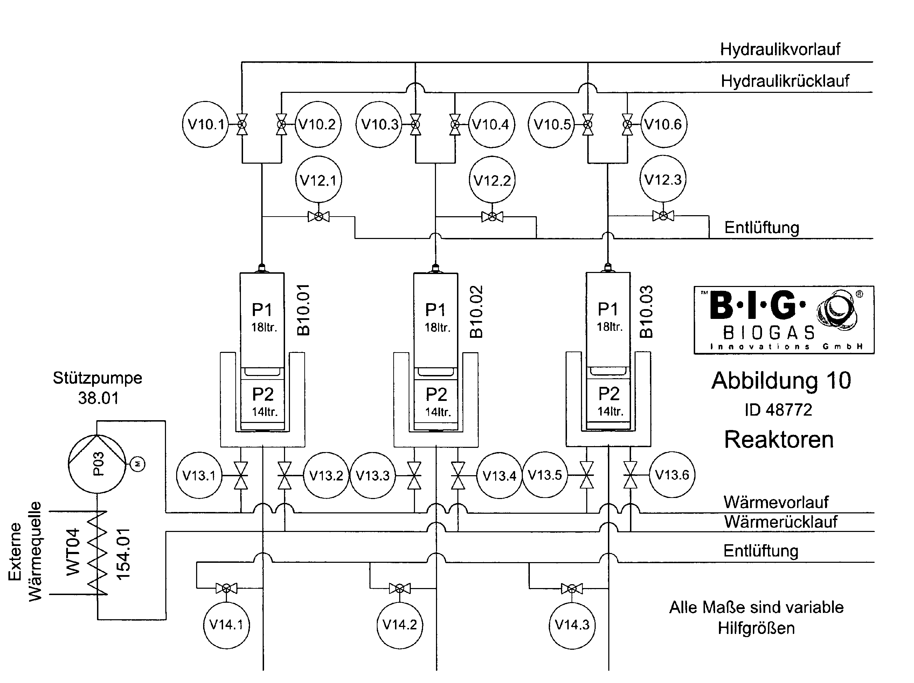

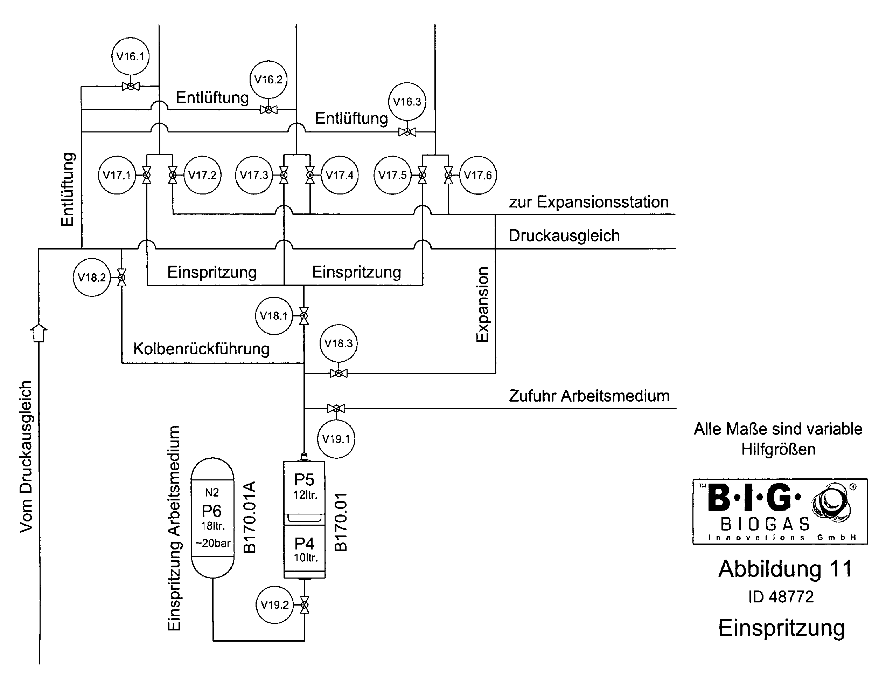

Der zylindrische Deckel und der zylindrische Boden des Reaktionsbehälters, vornehmlich der Kolbenspeicher, weisen folgende technische Eigenschaften auf, und werden wie folgt ausgebildet und gefertigt:
- Der dargestellte Behälterabschluß am Reaktionsbehälter (siehe Abbildung 4) hat im Zentrum eine Durchgangsbohrung mit einem Durchmesser zwischen **D=50mm** bis zu **D=117mm** (siehe Abbildung 2). Dadurch wird sichergestellt, daß das einzubringende Volumen an Arbeitsmedium nicht durch die Durchgangsbohrung im Durchfluß eingeschränkt wird, sodaß keinerlei Gegendruck, Druckaufbau und Reibungsverlust zu erwarten ist. Die konische Erweiterung mit einem radialen Übergang im hinteren Teil des Abschlußdeckels **(R=₂₀mm** Radius siehe Abbildung 2) unterstützt die Einbringung und den damit verbundenen Druckabbau nach dem Radius durch entsprechende Strömungsverhältnisse in den Reaktionsbehälter am Eintritt.
- Die 4 über Kreuz befindlichen Schrauben Sacklochgewinde **M24** (siehe Abbildung 2 & 3) dienen zur Befestigung des Reaktionsbehälters in vertikaler Position. Die Befestigung erfolgt über den Behälterabschluß des Reaktionsbehälters mit dem Bodenblech des Thermalbades oder der Befestigung des Reaktionsbehälters gemeinsam mit dem Einzelwärmebehälter (Doppelmantelbeheizung). Um die Dichtigkeit des vertikal stehenden Reaktionsbehälters gegenüber dem Thermalbad herzustellen, wird zwischen der Standfläche des Reaktionsbehälters (siehe Abbildung 2) und dem Boden des Thermalbad eine Flachdichtung, hier in der Abbildung 2 mit D=119mm angedeutet, gelegt. Diese hat einen Außendurchmesser zwischen D=80mm bis D=119mm je nach Größe des Reaktionsbehälters (siehe Abbildung 2) und wird in der 2mm tiefen Senke des dargestellten Abschlussdeckels eingelegt. Durch die 2mm Senke wird die Dichtung zwangsgeführt und kann daher nicht aus eigenen oder übertragenen Kräften aus ihrer Sollposition verrutschen. Zur Unterstützung der Dichtigkeit wird außerdem zusätzlich ein O-Ring am äußersten Durchmesser (außerhalb des Teilkreises für die M24) parallel zwischen dem Behälterabschluß des Reaktionsbehälters und dem Boden des Thermalbades eingelegt. Bei Einsatz eines Einzelwärmebehälters entfällt diese O-Ringdichtung. Dieser beschriebene Abschluß wird sowohl beim Kolbenspeicher auf beiden Enden, als auch als 1-seitiger Abschluß am Boden der Blasenspeichers eingesetzt (siehe Abbildung 5 die Begrenzung der 2. Kammer **"P2").** Die Kopfseite des Kolbenspeichers und des Blasenspeichers variieren leicht (siehe Abbildung 5 die Begrenzung der 1. Kammer **"P1"),** weil beim Blasenspeicher die Aufnahme des Blasenhalses gewährleistet sein muß (siehe Abbildung 7). Der Einbau des Abschlusses auf der Seite von **"P1"** erfolgt im Falle des Blasenspeichers (siehe Abbildung 5) mit einem Abschluß gemäß Abbildung 7.

### 2.2.2 Reaktionsbehälter mit Doppelmantelbeheizung

In Ergänzung zum gemeinsamen Thermalbad werden die Reaktionsbehälter in Einzelwärmebehälter gestellt oder gelegt, die mit entsprechender thermischer Leistung durchströmt werden. Der Aufbau der Einzelwärmebehälter entspricht einem Heizkörper aus dem Heizungsbau eines geschlossenen Heizungssystems, sodaß ein autarker einzelner angeschlossener Kreislauf für jeden einzelnen Reaktionsbehälter zur Verfügung steht. Vorteil bei dem Einzelwärmebehälter besteht darin, daß die Wärmezufuhr des großen Thermalbades entfällt, und demnach der Gesamtwirkungsgrad der Anlage angehoben wird. Außerdem entfallen die Systeme zur Überwachung im drucklosen Behälter. Der Druckanstieg im Thermalbad wegen Verdampfungsdruck im Thermalbad wird ebenso unterbunden.

### 2.3 Arbeitsmedien

Der höchste erreichbare Arbeitsdruck unter Niedertemperatur (<= **+100°C)** bestimmt den Einsatz eines bevorzugten Arbeitsmediums, und es kann daher für diese Anwendung frei gewählt werden. Das Arbeitsmedium muß lediglich bei möglichst niederen Temperaturen einen möglichst hohen Dampfdruck, basierend auf möglichst niedriger Sublimation und Zusammensetzungen zu azeotropischem Verhalten aufbauen. Daher können auch mehrere frei definierte Arbeitsmedien in ihrer unterschiedlichen Struktur und in ihrem unterschiedlichen Verhalten zu einem neuen Arbeitsmedium zusammengebracht werden.

### 2.3.1 Arbeitsmedium nach eigenen Erkenntnissen

Das nach eigenen Erkenntnissen gewonnenes Arbeitsmedium setzt sich aus folgenden Komponenten zusammen:
- ∼05 Vol-% Methanol
- ∼12 Vol-% Video 90
- ∼75 Vol-% R410A
- ∼08 Vol-% NH₃

Die Clusterbildung spielt bei dieser Mischung eine entscheidende Rolle, sodaß sich diese Flüssigkeit, wenn sie verdampft, nicht mehr wie ein ideales Gas verhält. Ähnlich wie beim Wasser mit seinen beiden **+104,5°C** angeordneten Wasserstoffatomen am Sauerstoffatom, müßte Wasser theoretisch nicht flüssig, sondern gasförmig sein. Clusterbildung von Molekülen verhindert das Verdichten erheblich. Aus diesem Grund ist Wasser auch fast nicht komprimierbar und besitzt einen gewissen Schubstangeneffekt. Ebenfalls wie auch bei Wasserdampf. Begrenzt man dann noch das Domvolumen auf ein Minimum verliert der theoretische Wert der Enthalpie dieser Mischung seine Gültigkeit, und es sind Anomalien feststellbar, die empirisch und stabilisiert in der Praxis eingebracht werden können.

### 2.3.2 Regenerierung von Arbeitsmedien

Der gesamte Arbeitszyklus wird geschlossen, indem das ausgestoßene hydraulische Medium wieder unter anstehendem Arbeitsdruck im hydraulischen Kreislauf zur Befüllung der 1. Arbeitsraumes **"P1"** eingebracht wird, und das hydraulische Medium den Kolben bis zum Ende des Arbeitsraumes **"P2"** zurückschiebt. Dadurch wird der Gasraum **"P2"** derart verkleinert, daß nahezu mehr als 95% vom benutzten (expandiertem) Arbeitsmedium ausgestoßen wird. Erst dann ist der hydraulische Kreislauf innerhalb eines Arbeitszyklus beendet. Durch die Befreiung des Arbeitsraumes **"P2"** vom Arbeitsmedium wird kein zusätzlicher Zyklus zur Abkühlung des Gasraumes zur Verflüssigung des Arbeitsmediums benötigt. Diese Tatsache macht den entscheidenden Unterschied zum CARNOT-Prozesses und verhindert die praktische Anwendung des CARNOT-Prozesses. Das ausgestoßene Arbeitsmedium wird durch den hohen Arbeitsdruck und angepaßte Auslaßöffnung mit Expansionskälte am Austritt der Arbeitsraumes **"P2"** abgekühlt. Dabei verflüssigt sich die Feuchtigkeit des gasbeladenen Arbeitsmediums gleichzeitig, die dann wieder z.B. über die Sammeldruckbehälter **"B150.01"** bis **"B150.03"** in die Selbsteinspritzung gelangt. Von da aus gelangt das Arbeitsmedium wieder mit Hilfe der Selbsteinspritzung in die 2. Kammer **"P2"** des Nächsten freiwerdenden Reaktionsbehälters. Die bei der Expansion entstehende Expansionskälte in den Expansionsbehältern, z.B. **"B150.02",** kann über handelsübliche technische Vorrichtungen wie z.B. Wärmetauscher und bereits vorhandene technische Verfahren abgenommen und zu weiteren Verwendungszwecken genutzt werden.

### 3 Ablaufsteuerung

### 3.1 Kurze Zusammenfassung

Die Anwendung basiert auf der Tatsache, daß Arbeitsdruck bis zu maximal 320bar je nach Arbeitsmedium in der 2. Kammer **"P2"** des Reaktionsbehälters (siehe Abbildung 4) aufgebaut wird. Der Arbeitsdruck aus Arbeitsraum **"P2"** überträgt sich direkt auf das hydraulische Medium in der 1. Kammer des Reaktionsbehälters **"P1",** das über den anstehenden Arbeitsdruck verdrängt wird. Mit dem anstehenden Arbeitsdruck und dem verdrängten Volumenstrom des hydraulischen Mediums wird ein hydraulischer Antrieb wie z.B. hydraulischer Motor bzw. hydraulischer Generator angetrieben. Dieser hydraulische Antrieb ist direkt mit einem hydraulischen Generator verbunden, der abhängig von den Druckverhältnissen über Ausgleichsmaßnahmen gleichmäßig angetrieben wird, sodaß von diesem Generator elektrische Leistung abgegeben wird.

### 3.1.1 Abhängigkeiten in der Leistungssteuerung

Die zentrale SPS-Steuerung ist in der Lage, an Hand der festgestellten thermischen Eingangsleistung die Anzahl der Reaktionsbehälter selber zu bestimmen, die in die Arbeitszyklen einbezogen werden können, sowie die nicht benötigten Reaktionsbehälter, die nicht mit thermischer Leistung versorgt werden können, wegzuschalten.

Im Leistungsbereich von ca. 85% bis 100% bleibt die Wandlung von thermischer Leistung in mechanische Arbeit unbeeinflußt. Bei ca. 70% bis 85% kann mit Hilfe der mechanischen Arbeit keine Generatorleistung zur Wandlung von mechanischer Arbeit in elektrische Energie mehr umgesetzt werden, da das Verdrängungsvolumen nicht mehr ausreicht den Generator konstant zu betreiben. Bei Leistungen kleiner gleich ca. 70% reicht die thermische Leistung nicht mehr aus, um in mechanische Arbeit gewandelt zu werden. Die gesamte Einrichtung zur Wandlung von thermischer Leistung in mechanische Arbeit stellt den Betrieb bei thermischer Leistung kleiner gleich ca. 50% ein.

### 3.2 Thermischer Kreislauf

Die Zufuhr von thermischer Leistung ist ein grundlegendes und notwendiges Hilfsmittel, ohne den die Wandlung von thermischer Leistung in mechanische Arbeit bzw. keine Wandlung in elektrische Energie durchführen kann, weil die Reaktionsbehälter ständig mit thermischer Leistung versorgt werden müssen, um das in die 2. Kammer **"P2"** eintretende Arbeitsmedium sofort und unvermittelt in Reaktion zu versetzen. Zum Einsatz als thermische Energiequelle können alle bekannten Wärmequellen kommen, die eine Mindesttemperatur von mindestens +1°C anliefern können. Wärmequellen sind z.B. Blockheizkraftwerke, wie sie handelsüblich in Biogasanlagen eingesetzt werden, Kühltürmen der Industrie, Kraftwerke jeglicher Art und Größe sowie mehrstufige Turbinensysteme (z.B. GOD-Turbinen). Höhere Temperaturen als +99°C werden nicht eingesetzt.

Als Arbeitsmedium wird unter anderem auch CO₂ eingesetzt. Der Vorteil von CO₂ gegenüber dem herkömmlichen Arbeitsmedium R410A ist unter anderem der thermische Aspekt. Während **R410A** bei +60°C ca. 42bar aufbaut, entwickelt **CO₂** bereits bei +30°C einen Druck von ca. 70bar abs. und erreicht bei +31°C bereits den kritischen Punkt. Bei dem nach eigenen Erkenntnissen gewonnene Kälte- Triebmittel wird bereits bei +50°C der ideale Arbeitsdruck aufgebaut. Dadurch können höhere Arbeitsdrücke für das hydraulische Medium direkt auf den hydraulischen Antrieb erzielt werden, der daraus resultierend den Generator kraftvoller antreiben kann, sodaß höhere Drehmomente angesetzt werden können, die in Folge daraus wiederum höhere Wirkungsgrade erzielen lassen.

Die Verbindung der Wärmequelle zur Umsetzung von thermischer Energie in elektrische Energie wird über den Eingangswärmetauscher **"WT04"** hergestellt. Dadurch wird zum Einen die Wärmezufuhr zu den Reaktionsbehältern sichergestellt. Zum Andern wird der Wärmekreislauf durch den Wärmetauscher **"WT04"** vom Wärmelieferanten entkoppelt, sodaß Wartung und Service auf beiden Seiten unabhängig ausgeführt werden kann. Der Wärmekreislauf hält das Thermalbad in seiner Temperatur konstant und hebt die Temperatur des Arbeitsmediums nach Durchströmen der Expansionsstationen um das DeltaT an, sodaß die Reaktionszeiten in den Reaktionsbehältern deutlich kurz gehalten werden können.

### 3.2.1 Thermalbad

Sofern das Thermalbad bevorzugt eingesetzt wird, werden keine Doppelmantelbeheizungen eingesetzt. Das Thermalbad wird auf eine möglichst konstante Temperatur in Abhängigkeit vom Arbeitsmedium gehalten, um die darin stehenden oder liegenden Reaktionsbehälter jederzeit mit ausreichender thermischer Leistung versorgen zu können. Hierzu wird eine vielfache Umwälzung des thermalen Mediums im Thermalbad bis zu 800Liter/min. angewendet, dessen Wärme von der Wärmequelle, dem Wärmetauscher z.B. **"WT04",** bezogen wird. Die tatsächliche Anzahl der kompletten Umwälzungen hängen von der jeweiligen zugeführten verfügbaren thermischen Leistung ab. Durch die Anzahl der Umwälzungen wird verhindert, daß die Temperatur im Thermalbad absackt. Dadurch bedingt werden die Reaktionszeiten zum Aufbau des Arbeitsdruckes in der 2. Kammer **"P2"** des Reaktionsbehälters deutlich verkürzt, weil die Arbeitstemperatur lediglich für die entnommene Temperaturdifferenz wieder aufgebaut werden muß. Die Reaktionsbehälter werden zur aktiven Unterstützung von kurzen Reaktionszeiten im Thermalbad **direkt** mit Hilfe von Düsen in der Nähe der Standflächen mit dem thermalen Energieträger versorgt.

### 3.3 Steuerung der Reaktionsbehälter

Alle Reaktionsbehälter können je nach Bedarf einzeln Arbeitsdruck aufbauen und jeder einzelne Reaktionsbehälter autark angesteuert werden. Der einzelne Reaktionsbehälter kann nicht nur autark, sondern wahlweise auch in Gruppen zusammengefaßt und angesteuert werden. Auch bei der Zusammenfassung als Gruppe von Reaktionsbehälter baut dennoch jeder Reaktionsbehälter autark für sich Arbeitsdruck auf. Der in der Gruppe anstehende Arbeitsdruck kann dann pro Behälter alleine oder gemeinsam an die nächste Prozeßstufe weitergereicht und dort weiter verarbeitet werden. Die elektrische Ausgangsleistung kann somit über die Anzahl der autark bzw. gemeinsam arbeitenden Reaktionsbehälter gesteuert werden.

### 3.3.1 Steuerung des Füllgrades im Reaktionsbehälter

Die Befüllung des Reaktionsbehälters wird indirekt über die elastomere Blase oder direkt mit der Position des Kolbens innerhalb des Reaktionsbehälters angesteuert. Um beim Kolbenspeicher die Kolbenposition in jedem der Reaktionsbehälter mit Hilfe der Anlagensteuerung überwachen zu können, wird ein induktiver Sensor zur Positionsmeldung des Kolbens von **AUSSEN** am Reaktionsbehälter angebracht und so positioniert, daß er die untere Entfernung ab Einlaß des Arbeitsraumes **"P2"** bis zur Arbeitsposition des Kolbens bestimmt. Die Bestimmung der Kolbenposition erfolgt erst in der Rücklaufphase des Kolbens nach der Expansion und nach der vollständigen Entleerung des Arbeitsraumes **"P2".** Dadurch kann in der Anlagensteuerung jederzeit der Füllstand für jede einzelne der beiden Kammern unabhängig voneinander oder gemeinsam mit anderen Sensoren überwacht werden. Die Anzahl der einzusetzenden Sensoren hängt von der Größe des Reaktionsbehälters und dem benötigten Füllgrad sowie von den technischen Ausbildungen des Reaktionsbehälters ab. Die Positionsabfrage des Kolbens kann alleine autark oder zusammen mit weiteren induktiven Sensoren am einzelnen Reaktionsbehälter oder in Gruppierungen von Reaktionsbehältern angebracht und positioniert werden.

### 3.3.2 Befüllung des Reaktionsbehälters (hier Kolbenspeicher)

Zu Beginn des einzelnen Arbeitsprozesses wird die 1. Kammer **"P1"** des Reaktionsbehälters mit hydraulischem Medium (z.B. reines Wasser versetzt mit Frostschutzmittel bzw. handelsüblichem HYDRAULIKÖL aus dem Schwerindustriebereich) befüllt. Dabei wird der Kolben des Reaktionsbehälters (siehe Abbildung 4) in die unterste Position vorgeschoben, sodaß sich der Innenraum der 2. Kammer **"P2"** auf das physikalische Minimum reduziert. Dabei werden die verbliebenen restlichen Anteile des Arbeitsmediums aus der 2. Kammer **"P2"** zwangsläufig verdrängt. Anschließend wird die 1. Kammer **"P1"** mit den Hauptventilen abgesperrt. Dadurch wird ein Austreten der hydraulischen Flüssigkeit verhindert, und es werden die Ventile zur Entlüftungsstrecke geöffnet.

Anschließend wird die 2. Kammer **"P2"** innerhalb des gleichen Reaktionsbehälters mit dem Arbeitsmedium z.B. **R410A** oder **CO₂** oder ein Arbeitsmedium nach eigenen Erkenntnissen befüllt. Dabei wird der Kolben ausgehend aus seiner Endposition soweit verdrängt, sodaß sich das Volumen in der 1. Kammer **"P1"** auf seinem Sollvolumen befindet. Das dabei verdrängte Volumen aus der 1. Kammer **"P1"** wird über die Entlüftungsleitungen freigegeben, sodaß ein entlüftetes Volumen auf der Seite des hydraulischen Mediums verbleibt. Der Volumenstrom der Hydraulik und des Arbeitsmedium wird mit einer induktiven Positionsbestimmung der Kolbenposition überwacht. Die Temperaturen und Druckstufen zum Zeitpunkt des Eintritts des Arbeitsmediums in die 2. Kammer **"P2"** sind in Verbindung mit der bereits vergangenen Zeitachse sehr unterschiedlich. Diese Befüllung ist allerdings ein recht zeitkritischer Vorgang, und wird mit einer speziell angefertigten Selbsteinspritzung vorgenommen, bei der das Arbeitsmedium innerhalb von wenigen Sekunden in die 2. Kammer **"P2"** eingebracht wird (Erläuterungen siehe unter **"Selbsteinspritzung").** Anschließend wird die 2. Kammer **"P2"** mit Ventilen abgesperrt. Somit wird ein Austreten des Arbeitsmediums aus der 2. Kammer **"P2"** verhindert.

### 3.3.3 Thermische Leistungsnutzung

Die Reaktionsbehälter stehen im regulären Zustand senkrecht geführt bis zur Arbeitsposition der Kolben, also bis ca. zur Hälfte im Thermalbad. Als thermischer Leistungsträger wird z.B. Wasser mit Additiven wie z.B. Thermalöl oder Glykol eingesetzt. Mit Einsatz von Additiven wird jedoch auch gleichzeitig die Wärmekapazität beeinträchtigt, sodaß sich Nebenwirkungen auf die Methode ergeben können. Höhere Temperaturen führen ebenso zu unterschiedlichen Volumenströmen, die zugeführt werden müssen. Ebenfalls wirken sich geodädische Höhenunterschiede auf das Temperaturverhalten der Wärmequellen nachhaltig aus.

Bei Einsatz der Doppelmantelbeheizung entfällt das senkrecht stehende Anordnen im großen Thermalbad, in dem die Reaktionsbehälter stehender Weise fixiert positioniert werden müßten. Durch den stehenden Reaktionsbehälter wird die 2. Kammer **"P2"** bis zur Kolbenposition im angeheizten Thermalbad ständig mit frischer thermischer Leistung versorgt. Das Thermalbad selber wird auf eine möglichst konstante Temperatur zwischen **+80°C** und maximal ca. **+98°C** gehalten. Hierzu wird notwendigerweise die vielfache Umwälzung des thermalen Mediums im Thermalbad pro Stunde angewendet, dessen Wärme von der Wärmequelle, z.B. dem Wärmetauscher **"WT04",** bezogen wird. Durch Zusatz Volumina in der thermischen Leistung wird zum Einen verhindert, daß die Temperatur im Thermalbad an den Randzonen zum Reaktionsbehälter absackt, und zum Anderen werden die Reaktionszeiten zum Aufbau des Arbeitsdruckes in der 2. Kammer **"P2"** des Reaktionsbehälters deutlich verkürzt. Der Volumenstrom bei der thermischen Leistung ist der Schlüssel zu kurzen Reaktionszeiten.

Da die 2. Kammer **"P2"** ständig unter thermalem Einfluß steht, reagiert das Arbeitsmedium unverzüglich mit Eintritt in die 2. Kammer **"P2"** auf die bereits anstehende thermische Leistung. Das in den Arbeitsraum "P2" eingebrachte Arbeitsmedium versucht sich basierend auf der thermalen Leistungszufuhr durch die Wandungen auszudehnen. Da aber das räumliche Volumen des Arbeitsraumes "P2" im Reaktorbehälter konstant bleibt, während sich das Arbeitsmedium ausdehnt, erfolgt ein Druckanstieg des Arbeitsdruckes in der 2. Kammer **"P2".** Bei **+66°C** entwickelt das Arbeitsmedium **R410A** einen Arbeitsdruck von ca. 42bar. Ab **+66°C** geht das Arbeitsmedium **R410A** in den gasförmigen Zustand über (Sublimation). Bei einer Temperatur von **+75°C** entsteht bereits ein gemessener Arbeitsdruck von ca. 52bar. abs. Bei alternativem Einsatz von **CO₂** entsteht bereits bei +30°C bereits ein Arbeitsdruck von 70bar abs.

### 3.3.4 Aktive Druckunterstützung

Die Druckunterstützung wird gebraucht, um den in den Reaktionsbehältern stattfindenden Ausstoß des hydraulischen Mediums zu unterstützen, damit die Hydraulik einen hydraulischen Antrieb ansteuern kann. Die Behälter für die Druckunterstützung haben keinen Kolben im Reaktionsbehälter und werden ganzheitlich genutzt. Zum Aufbau des Arbeitsdruckes in der Druckunterstützung wird ebenfalls das Arbeitsmedium **R410A** bzw. **CO₂** bzw. ein nach eigenen Erkenntnissen gewonnenes Arbeitsmedium eingesetzt. Das Arbeitsmedium wird in die Behälter der Druckunterstützung, die ebenfalls von thermaler Leistung durchgängig umgeben sind, eingebracht. Dadurch, daß auch diese Druckbehälter im temperierten Thermalbad stehen, oder über eine Doppelmantelbeheizung verfügen, wird bei gleichbleibendem Volumen in Folge der Zufuhr von thermischer Leistung, vom Arbeitsmedium ein Druck im Innenraum **"P3"** aufgebaut.

Während des Öffnens z.B. des Ventils **"V11.1"** für die 1. Kammer **"P1"** am Behälter **"B10.01"** vergrößert sich das Volumen der 2. Kammer **"P2".** Bedingt durch die Volumenvergrößerung sackt der Arbeitsdruck in **"P2"** proportional zum vergrößernden Volumen ab. Um diesem Druckabfall zu begegnen, erfolgt die Druckunterstützung automatisch aus den separaten und ebenfalls im Thermalbad stehenden Druckbehältern, z.B. **"B160.01"** bis **"B160.03"** der Druckhaltestation. Beim Befüllen der 2. Kammer **"P2"** im Reaktionsbehälter wird bereits Druck an die Ventile z.B. **"V16.1", "V16.2"** and **"V16.3"** von der Druckstation angelegt. Der angelegte Arbeitsdruck verbleibt dort, bis eine Druckdifferenz von mehr als 1bar zwischen der Druckmeßstation **"PIR** 160.01" und der Druckmeßstation **"PIR** 15.01" gemessen wird. Durch die Messung der Druckdifferenz wird z.B. das Ventil **"V16.1", "V16.2"** oder aber z.B. **"V16.3"** geöffnet, je nach Druck im aktuellen Arbeitszylinder. Dadurch kann der in der Druckstation vorherrschende Arbeitsdruck in der jeweiligen 2. Kammer **"P2"** des Reaktionsbehälters entweichen und eine aktive Druckunterstützung zum Auswerfen des hydraulischen Mediums gegeben werden.

Ist der Druck in einem der Druckunterstützungsbehälter z.B. **"B160.01", "B160.02"** oder **"B160.03"** niedriger als der zu erwartende Arbeitsdruck in der 2. Kammer **"P2"** des Reaktionsbehälters, wird das Arbeitsmedium aus dem betroffenen Druckunterstützungsbehälter mit seinem aktuellen Druck in die Behälter z.B. **"B150.01"** bis **"B150.03"** oder in Richtung Kältestation expandiert, sodaß im betroffenen Behälter lediglich max. ein Druck von ca. 7 bis 9 bar abs. ansteht. Damit die Druckunterstützung wieder regeneriert (Arbeitsdruck aufbaut), wird verflüssigtes Arbeitsmedium aus einem der Expansionsbehälter z.B. **"B150.02"** über die Stützpumpe **"P02"** abgezogen und in den betroffenen weggeschalteten Druckunterstützungsbehälter z.B. **"B160.01", "B160.02"** oder **"B160.03"** eingebracht. Dadurch, daß die Druckbehälter ebenfalls im temperierten Thermalbad stehen oder mit der Doppelmantelbeheizung versehen sind, baut das Arbeitsmedium sofort nach Eintritt in den Innenraum **"P3"** seinen Arbeitsdruck wieder auf, der dann wieder nach Zuschalten des Druckbehälters für den nächsten Zyklus zur Verfügung steht.

### 3.3.5 Regenerierung des Arbeitsmediums

Der Zyklus wird dadurch geschlossen, daß das ausgestoßene hydraulische Medium wieder zur Befüllung der 1. Kammer **"P1"** eingesetzt wird. Das ausgestoßene Arbeitsmedium wird durch Expansion abgekühlt und dabei verflüssigt, um dann wieder über die Druckbehälter z.B. **"B150.01"** bis **"B150.03"** in die Selbsteinspritzung zu gelangen, um dann in die 2. Kammer **"P2"** des nächsten freiwerdenden Reaktionsbehälters "eingeschossen" zu werden. Damit wird für das Arbeitsmedium ebenfalls der Kreislauf geschlossen. Die bei der Expansion entstehende Expansionskälte in den Expansionsbehältern (z.B. **"B150.02")** kann über handelsübliche technische Vorrichtungen und bereits vorhandene technische Verfahren abgenommen und zu weiteren Verwendungszwecken genutzt werden.

Nach Öffnen des Absperrorgans z.B. **"V17.2"** als Begrenzung zur druckbelasteten Seite des Arbeitsmediums expandiert das Arbeitsmedium mit seiner thermischen Aufladung (überwiegend gasförmig) in Richtung Expansionsbehälter z.B. **"B150.01°** bis **"B150.03"** und durchläuft dabei einen Wärmetauscher z.B. **"WT02".** Dieser Wärmetauscher soll sicherstellen, daß das Temperaturniveau des Arbeitsmediums auch tatsächlich bei min. ca. +80°C **(CO₂=** +30°C; Eigenmedium = +50°C) angehoben wird, sodaß eine sichere Expandierung bei stabilisierter Temperatur und stabilisiertem Arbeitsdruck stattfinden kann.

Nach Durchlaufen eines Wärmetauschers z.B. **"WT02"** strömt das Arbeitsmedium **R410A,** das **CO₂** oder das nach eigenen Erkenntnissen gewonnenes Arbeitsmedium von oben in einen der Expansionsbehälter z.B. **"B150.01"** bis **"B150.03"** oder es wird einer Kühlstation zugeführt, die NICHT Gegenstand der Patentanmeldung ist. Die Bohrung im Eintritt der Expansionsbehälter rangiert zwischen 1mm bis 130mm je nach Entspannungsdruck und entsprechender Feuchtigkeitsbeladung des gasförmigen Arbeitsmediums. Dabei wird bei der Expansion am Ausgang der auftretenden Querschnittsverengung Expansionskälte aus dem Feuchtigkeitsgehalt freigesetzt, während sich die Feuchtigkeit in den Gasen des Arbeitsmediums als Flüssigkeit in den Rohrleitungen oder in Behältern niederschlägt und sich letztlich am Boden der Behälters sammelt. Die Temperatur der Expansionskälte läßt sich mathematisch abbilden, liegt aber in der Praxis gemessen für diesen speziellen Anwendungsfall bei ca. -20°C bis -46°C je nach Durchmesser der Expansionsöffnung am Eintritt, des wirksamen Arbeitsdrucks und der Größe des nachfolgenden Expansionsraumes. Der verbleibende Arbeitsdruck nach der Entspannung des Arbeitsmittels in dieser Anwendung liegt bei ca. 3bar bis 9bar. Während dieses Vorganges sammelt sich die freiwerdende Flüssigkeit aus der Feuchtigkeit des Gases aus dem Arbeitsmedium an der tiefsten Stelle des senkrecht stehenden Expansionsbehälters, der außerhalb des Thermalbades steht. Jetzt kann das verflüssigte Arbeitsmedium mit der Stützpumpe **"P02"** am unteren Ende der Expansionsbehälter abgenommen, und wieder in den Kreislauf zu einem weiteren Zyklus der Selbsteinspritzung, und von da aus in eine in der Zwischenzeit entleerten 2. Kammer **"P2"** eines Reaktionsbehälters in einen neuen Zyklus verbracht werden. Während den Zyklen oder Standzeiten wird das verflüssigte Arbeitsmedium mit Hilfe des Kompressors im Kreislauf durch Expansion kühl gehalten. Im Normalzyklus wird das Arbeitsmedium zyklisch im Umlauf der Expansionsbehälter verpumpt, und damit durch die Expansionsbehälter mit den Expansionsöffnungen gepreßt, damit das Arbeitsmedium ständig stabil auf Expansionskälte gehalten wird, oder einer externen Kältestation zugeführt wird. Diese Umlaufpumpung ist notwendig, da z.B. die Umgebungswärme der Anlage auch bei Isolierung der Expansionsbehälter und Rohrleitungen zum Temperaturanstieg in den Druckräumen **"P3"** führen, und zum Ausgasen des Arbeitsmediums führen würde. Die Expansionsstation arbeitet nach dem Verdampferprinzip.

### 3.4 Selbsteinspritzung

### 3.4.1 Allgemeines

Um eine zu langwierige Rüstzeit der 2. Kammer **"P2"** z.B. der Behälter **"B10.01"** bis **"B50.01"** zu verkürzen, wird eine sogenannte "Selbsteinspritzung" angewendet. Dazu wird vorzugshalber ein Reaktionsbehälter, z.B. **"B170.01"** mit einem frei beweglichen Kolben so eingesetzt, daß in dessen 2. Kammer **"P4"** ständig **N₂** (Stickstoff) bis zu 50 bar abs., je nach Leistungsgröße und Arbeitsmedium, ansteht. In der Ausgangslage sind die Ventile **"V18.1", "V18.3", "V19.1"** und **"V18.2"** geschlossen, und das Ventil **"V19.2"** geöffnet, sodaß der Arbeitsdruck aus dem Stickstoffvorrat **"B170.01A"** auf den Kolben des Reaktionsbehälters der Kammer **"P4"** wirkt, der dadurch in die vorderste Position vorgeschoben wird. Dabei wird die 2. Kammer **"P5"** auf ein Minimum verkleinert. In dieser Kolbenposition muß der gewünschte Arbeitsdruck von mindestens 30bar bis 50bar anstehen.

### 3.4.2 Beschickung des Arbeitsraumes mit Arbeitsmedium

Die physikalische Trennung der beiden Arbeitsräume, vorzugshalber Kolben der Selbsteinspritzung, verharrt durch den Vordruck des Behälters z.B. **"B170.01A"** mit **N₂** (Stickstoff) aus der Kammer **"P4"** in der vordersten Position. Um den Kolben zurückzuschieben, wird die Verbindung zur Druckunterstützung z.B. mit dem Ventil **"V18.2"** geöffnet, während alle anderen Ventile z.B. **"V18.1", "V18.3"** und **"V19.1"** geschlossen bleiben. Durch den Arbeitsdruck von ca. 52bar bei Einsatz von R410A bis zu 330bar mit eigenem Arbeitsmedium wird der Kolben in der Kammer **"P4"** in die hinterste Position gebracht, und das Volumen der Kammer **"P5"** auf ein Maximum vergrößert. Dabei entsteht ein geringfügiges Vakuum in der Kammer **"P5".** Mit diesem Vorteil kann in dieser erzwungenen Arbeitsstellung des Kolbens der Kammer **"P5"** mit dem Arbeitsmedium beschickt werden.

Der Arbeitsdruck im Druckbehälter z.B. **"170.01A"** steigt bei der Verbringung des Kolbens in die hintere Position proportional zum Ausgangsdruck und dem Arbeitsraum an. Als Nächstes wird Ventil **"V19.2"** geschlossen, sodaß der Druck nicht mehr auf die Kolbenseite in Kammer **"P4"** einwirkt, und das Ventil **"V18.2"** wird geschlossen. Durch Öffnen des Ventils **"V18.3"** erfolgt eine Entspannung des Arbeitsdrucks in der Kammer **"P5"** und es verbleibt ein restlicher Arbeitsdruck von 7bar bis 9 bar abs. in der Kammer **"P5"** des Reaktionsbehälters. Die Zufuhr des Arbeitsmediums kann dann über eine mehrstufige Stützpumpe **"P02"** erfolgen. Anschließend wird die Zufuhr des Arbeitsmediums z.B. mit Ventil **"V19.1"** wieder geschlossen. Somit sind derzeit alle Ventile, z.B. **"V18.1", "V18.2", "V18.3", "V19.1"** sowie die Stickstoffzufuhr z.B. mit Ventil **"V19.2"** geschlossen.

### 3.4.3 Einspritzvorgang

Zunächst wird z.B. das Ventil **"V19.2"** für die Stickstoffzufuhr (N₂) geöffnet. Es muß das Ventil z.B. **"V17.1"** geöffnet werden. Dann wird das Ventil z.B. **"V18.1"** geöffnet. Dadurch wird der Gegendruck auf Ventil z.B. **"V18.1"** aufgehoben, und der Arbeitsdruck des Stickstoffes kann sich frei in der Kammer **"P4"** entfalten. Dadurch wird der Kolben des Reaktionsbehälters derart beschleunigt, daß sich der 1. Innenraum **"P5"** innerhalb von wenigen Sekunden, in Abhängigkeit vom Durchmesser der Ausgangsöffnung und anstehendem Druck des Stickstoffes, minimiert. Dadurch daß das Ventil **"V12.1"** (Entlüftung) offen steht, kann mit dem Volumen des hydraulischen Mediums die Position des Kolbens für seine Arbeitsstellung bestimmt werden und es wird keine externe Dosierung benötigt. Die Kolbenbeschleunigung wird mit einem Drosselventil gesteuert. Zum Abschluß werden die Ventile z.B. **"V18.1"** und **"V17.1"** unverzüglich geschlossen, bevor die Reaktionen aus den Reaktionsbehältern einwirken können. Der eigentliche Vorgang der Einspritzung ist somit abgeschlossen, und die Vorgänge gemäß Abs. **"3.5.2 Beschickung** des Arbeitsraumes mit **Arbeitsmedium"** werden wieder eingeleitet.

### 3.5 Hydraulischer Kreislauf

Der hydraulische Kreislauf besteht aus 2 Aufgaben Teilbereichen. Zum Einen werden die gerade frei werdenden 1. Kammern **"P1"** der Reaktionsbehälter mit hydraulischem Medium nachgefüllt. Zum Anderen wird das hydraulische Medium unter Arbeitsdruck aus der 1. Kammer der Reaktionsbehälter **"P1"** ausgestoßen, und an den hydraulischen Antrieb angeliefert. Die 1. Aufgabe, das Befüllen der 1. Kammer **"P1"** der Reaktionsbehälter, startet bei der Stützpumpe **"P01",** mit der das hydraulische Medium aus dem hydraulischen Kreislauf entnommen, und über die Ventilation **"L01"** herabgekühlt wird. Mit der Ventilation soll die Betriebstemperatur des hydraulischen Mediums bei max. +80°C sichergestellt werden. Das hydraulische Medium wird in der 1. Kammer **"P1"** bei ca. 5bar bis 9bar abs. eingebracht, damit der Arbeitsdruck am Kolben mit entspannter 2. Kammer (ca. 3-7bar vorhanden) überwunden wird.

Die hydraulische Flüssigkeit in Kammer **"P1"** wird unter dem fast identischen Arbeitsdruck der 2. Kammer **"P2"** gesetzt, abzüglich mechanischer Verluste. Das basiert auf der Tatsache, daß sich der anstehende Arbeitsdruck in Kammer **"P2"** über den Kolben auf das hydraulische Medium in Kammer **"P1"** direkt überträgt, und daher annähernd den gleichen Arbeitsdruck aus **"P2"** auf das hydraulische Medium in **"P1"** ausübt.

Ist der höchste gewünschte Arbeitsdruck erreicht (je nach Arbeitsmedium unterschiedlich), wird das Ventil an der Kammer **"P1"** mit dem hydraulischen Medium geöffnet, und das hydraulische Medium kann sich in Richtung hydraulischem Antrieb entspannen. Die hydraulische Flüssigkeit entspannt sich z.B. entweder in Richtung eines Wasserkraftwerkes in Form einer Wasserturbine (Pelton Turbine) oder z.B. in Richtung eines hydraulischen Motors. Der hydraulische Antrieb seinerseits treibt einen direkt adaptierten Generator zur Erzeugung von elektrischer Energie an. Es besteht allerdings auch die Möglichkeit, die hydraulische Flüssigkeit direkt und ohne Umweg, z.B. in Richtung eines hydraulischen Generators mit unterschiedlichen Arbeitsdrücken, abhängig vom Arbeitsmedium, von ca. 7 bis ca. 330bar zu entspannen.

Der hydraulische Arbeitszyklus wird dadurch geschlossen, daß das verdrängte hydraulische Medium nach Durchsatz am hydraulischen Antrieb wieder zur Befüllung der 1. Kammer **"P1"** in einem freiwerdenden Reaktionsbehälter im geschlossenen Hydrauliksystem eingebracht wird.

### 4 Hydraulische Antriebe

### 4.1 Hinweise

In Folge des im Reaktionsbehälter stattfindenden Anstieg des Arbeitsdruckes wird nach Öffnen der Ventile auf der Seite von **"P1"** das hydraulische Medium mit 40bar bis 52bar abs. bei Einsatz des Arbeitsmediums **R410A,** und 60bar bis 70bar abs. bei Einsatz des Arbeitsmediums **CO₂** z.B. durch eine Pelton Turbine gepresst, die mit z.B. 15kg/sek. bis 18kg/sek. Wasser angetrieben und dadurch einen direkt angeflanschten Generator antreibt, der bei diesen vorliegenden Betriebsbedingungen elektrische Energie erzeugt. Dabei wird darauf verwiesen, daß es sich bei einer Pelton Turbine um ein offenes hydraulisches System handelt, und demnach ein durchschnittlicher Verlust im Wirkungsgrad von ca. 15% bis 20% anzusetzen ist. Dieser Verlust ist kein Verlust über die Gesamtanlage, sondern lediglich ein Verlust im Teilsegment des Gesamtwirkungsgrades. Der Generator hat infolge seines Cos-phi ebenfalls einen Verlust von ca. 10% zu erwarten.

### 4.2 Theoretische Leistungsausbeute

| | | | |
|---|---|---|---|
| 48 | bar innen | | Innendruck bei ca. +65°C |
| -1 | bar außen & Verlust | | Atmosphäre |
| 47 | bar Differenz entspricht | | |
| 470 | m Wassersäule | | |

| **Formel:** | **0,5 c² = g * Xm Wassersäule (mit g = 9,81)** | | |
|---|---|---|---|
| 9,81 | Faktor g | (Konstante) | |
| 4512,6 | | | |
| 48,01406044 | Faktor c | | |
| | | | |

| **Formel:** | **Massestrom m' = Dichte * Fläche * c** | | |
|---|---|---|---|
| 0,00036 | m² Fläche bei D(li)=21,3mm | | |
| 5,6391 | Liter/sec je Behälter | | |
| 16,9173 | Bei Einsatz von 3 Reaktionsbehältern gleichzeitig im Eingriff | | |

| **Delta H Q** | | **Konstante** | **Wirk.grad Turbine** | | **Leistung** | **90% Leistungsansatz** |
|---|---|---|---|---|---|---|
| | 470 m Wassersäule | 9,81 | 0,85 = 85% | | 67,02kW => | **60,32** kW Ausgang |
| | | | | bei Einsatz von | **210**kW(th) = | **28,72** % Wirkungsgrad |

Wie hier im Beispiel gezeigt, hat der anstehende Druck, der bedingt durch die Temperatur in der 1. Kammer **"P1"** des Reaktionsbehälters entstanden ist, den maßgeblichen Einfluß auf die Leistungsfähigkeit des Turbinentriebes und beeinflußt damit den gesamten Wirkungsgrad der Wandlung von thermischer Energie in mechanische Arbeit maßgeblich.

**Hinweis zur Pelton Turbine:** Der Auslauf der Turbine erfolgt in einen drucklosen Behälter z.B. **"B61.01"** unter atmosphärischen Bedingungen, damit der Wirkungsgrad der Turbine voll ausgenutzt wird. Ansonsten würde durch den anstehenden Gegendruck auf das Turbinenrad im Turbinenkasten der Wirkungsgrad unkontrolliert herabgesetzt.

### 4.3 Hydraulischer Antrieb (hydraulischer Generator)

In Folge des im Reaktionsbehälter stattfindenden Druckanstiegs wird nach Öffnen der Ventile auf der Seite von **"P1"** das hydraulische Medium mit 40bar bis 240bar abs. (je nach Arbeitsmedium) durch einen bevorzugt hydraulischen Antrieb, z.B. hydraulischen Motor gepreßt, der z.B. bei 9Ltr/sek. bis 12Ltr/sek. einen Generator antreibt, der bei diesen vorliegenden Betriebsbedingungen z.B. ca. 60kW(el) und mehr erzeugen kann. Dabei wird darauf verwiesen, daß es sich in diesem Falle um ein geschlossenes und entlüftetes handelsübliches hydraulisches System handelt, und demnach ein maximaler Druckverlust von max. ca. 5% anzusetzen ist. Der Generator hat infolge seines Cos-phi einen Verlust im Wirkungsgrad von ca. 10% zu erwarten.

### 4.4 Leistungsanschluß

Um die Wärmeleistung in Strom zu wandeln wird ein handelsüblicher Generator direkt an den hydraulischen Antrieb, z.B. Pelton Turbine über eine Mitnehmereinrichtungen an der Wellenachse des Generators angeschlossen. Es kann ebenfalls anstelle der Pelton Turbine ein beliebiger hydraulischer Antrieb (z.B. hydraulischer Motor) mit 40bar bis 330bar abs. mit einem Generator verbunden werden. Der gewonnene Strom gelangt über die Anlagensteuerung und handelsüblichen Netz Anschlußeinrichtungen zum Anlagentrafo, von wo aus er ins öffentliche Netz eingespeist werden kann.

## Patentansprüche

1. Einsatz eines einzelnen oder mehrerer **Reaktionsbehälter** basierend auf den mechanischen und physikalischen Eigenschaften von serienmäßigen und handelsüblichen Druckbehältern, ausgebildet nach Merkmalen von Blasen,- oder Kolbenspeicher die durch deren physikalischen Aufbau einen großen zylindrischen Raum mit Hilfe sowohl einer elastomeren und **dadurch** verformbaren Blase oder auch eines metallischen zylindrischen Kolbens in 2 Teile teilt, um **dadurch** 2 unterschiedlichen Arbeitsmedien jeweils 1 getrennten Arbeitsraum in 1 gemeinsamen Behälter zu gewähren. Bei den Reaktionsbehältern bildet jeweils ein zylindrischer Deckel in der jeweils angemessenen Druckstufe den Abschluß mit jeweils 4x Schraubengewinde M24 zur Befestigung des Reaktionsbehälters sowie Vorrichtungen zur Abdichtung nach außen mit/ohne O-Ringen im Deckel- sowie Bodenabschluß. Die Bauform der Abschlußdeckel für den Kolben- Blasenspeicher sind Bestandteil der Anmeldung und sollen im Schutzanspruch mit ihren Formen und physikalischen Ausbildungen erfaßt werden

2. Eine Methode zur Wandlung von thermischer Energie in mechanische Arbeit bis hin zur Erzeugung von elektrischer Energie generell über folgende Schritte:
• **Einbringung** eines hydraulischen Mediums in die 1. Kammer **"P1"** eines Reaktionsbehälters z.B. mit Wasser mit Frostschutzmittel bzw. bevorzugt Hydrauliköl wie es im Schwerindustriebereich eingesetzt wird
• Positionsabfrage des Kolbens im Reaktionsbehälter mit Hilfe eines oder mehreren von **AUSSEN** an den Reaktionsbehälter angebrachten Sensoren zur induktiven Positionsmeldung der Kolbenstellung an die Anlagensteuerung. Diese Positionsabfrage kann alleine autark oder zusammen mit weiteren induktiven Sensoren am einzelnen Reaktionsbehälter angebracht werden. Es kann jedoch auch 1 Sensor für mehrere Reaktionsbehälter simultan eingesetzt werden
• **Einspritzung** unter Vordruck von 5bar abs. oder höheren Druckstufen des Arbeitsmediums vornehmlich z.B. Kältemittel **R410A** oder **CO₂** bzw. anderes Kältemittel/Triebmittel nach eigenen Erkenntnissen in die 2. Kammer **"P2"** eines Reaktionsbehälters
• **Einleitung/Überleitung von Druck** (Druckaufbau) von der 2. Kammer **"P2"** auf die 1. Kammer **"P1"** eines der angeschlossenen Reaktionsbehälter, der mit einem hydraulischen Medium angereichert ist
• **Verbindungsaufnahme** und Ausstoßen des hydraulischen Mediums aus der 1. Kammer **"P1"** des Reaktionsbehälters und Entspannung in den hydraulischen Kreislauf mit Hilfe von indirekter Druckübertragung des Arbeitsdruckes aus der 2. Kammer **"P2"**
• **Verbindungsaufnahme** der 2. Kammer **"P2"** mit der externen **Druckunterstützung,** um den Druckverlust bei Öffnen der 1. Kammer "P1" in der 2. Kammer **"P2"** des Reaktionsbehälters auszugleichen
• Hinzunahme einer **externen Druckunterstützung** zur Arbeitsdruckerhöhung zum Zeitpunkt der Entspannung der 1. Kammer **"P1"** in die 2. Kammer **"P2",** um den Ausstoß des hydraulischen Mediums aus der 1. Kammer **"P1"** des Reaktionsbehälters wegen Druckabfall zu unterstützen
• **Wandlung** des erzeugten Arbeitsdruckes zusammen mit dem hydraulischen Medium (lineare Bewegung) in mechanische Arbeit (drehende Bewegung) mit Hilfe eines direkt angetriebenen hydraulischen Antriebes autark oder im Verbund mit weiteren hydraulischen Antrieben, z.B. eines oder mehrerer hydraulischen **Motoren** oder eines oder mehrerer hydraulisch direkt angetriebener **Generatoren** zur Generierung von elektrischer Energie
• **Regenerierung** des thermisch angereicherten Arbeitsmediums mit Hilfe von 1 oder mehreren Expansionsschritten, ggfls. unter Anwendung und Unterstützung einer oder mehrerer handelsüblicher Kompressor- Kältestationen oder handelsüblicher Kältemaschinen jeglicher Art und jeglicher Funktionsweise
• **Aufbereitung und Abnahme** der anfallenden Kälte in einer einzelnen oder in mehreren Expansionsstufen über technische Vorrichtungen und weitere technische Verfahren um diese anfallende Kälte für weitere Anwendungen zu nutzten
Charakteristisch zu 2 ist, daß das hydraulische Medium in der 1. Kammer **"P1"** des Reaktionsbehälters, bedingt durch den ansteigenden Arbeitsdruck in Kammer "P2" und durch die anstehenden Temperaturen zur Beheizung von außen der 2. Kammer **"P2"** des Reaktionsbehälters indirekt unter Druck gesetzt wird.

3. Eine Methode übereinstimmend zu 1 und 2, bei dem die Reaktionsbehälter vornehmlich Blasen,- und oder Kolbenspeicher eingesetzt werden und nachfolgende Schritte ausführen:
• die Reaktionsbehälter stehen vornehmlich senkrecht oder horizontal in einem gemeinsamen **Thermalbad,** mit oder ohne Zusatzstoffe wie z.B. Thermalöl
• bevorzugt wird der Einsatz von Einzelwärmebehälter **(Doppelmantelbeheizung),** die direkt an die Reaktionsbehälter adaptiert ist, sodaß die Reaktionsbehälter stehend oder liegend und jeder Reaktionsbehälter einzeln und autark oder in kleinen oder großen Gruppierungen unabhängig von physikalischen Beschränkungen beheizt werden können. Der Kreislauf der Doppelmantelbeheizung wird entlüftet und wirkt wie eine geschlossene Heizungsanlage, bei der kein Dampfdruck auftreten kann
• Teilweise bis gänzliche Füllung der 1. Kammer **"P1"** des Reaktionsbehälters mit hydraulischem Medium vornehmlich Wasser bzw. Hydrauliköl wie es in der Schwerindustrie eingesetzt wird
• Teilweise bis gänzliche Füllung der 2. Kammer **"P2"** des Reaktionsbehälters mit der Methode der **Selbsteinspritzung** des Arbeitsmediums vornehmlich Kältemittel **R410A** oder **CO₂** bzw. ein anderes Kältemittel/Triebmittel nach eigenen Erkenntnissen
• Aufheizen der 2. Kammer **"P2"** des Reaktionsbehälters durch direkten Kontakt mit einem thermischen Medium zum Zwecke des Wärmetransports, sodaß mit zunehmender Temperaturangleichung in der 2. Kammer **"P2"** der Arbeitsdruck ansteigt
• **Verbindungsaufnahme** der 2. Kammer **"P2"** des Reaktionsbehälters mit der Expansionsstation, um den vorhandenen Druck in **"P2"** zu entspannen, und das Arbeitsmedium vornehmlich Kältemittel **R410A** oder **CO₂** bzw. ein anderes Kältemittel/Triebmittel nach eigenen Erkenntnissen verflüssigt, damit das verflüssigte Arbeitsmedium wieder dem Ausgangspunkt im Prozeß zugeführt werden kann. Zur Unterstützung der Verflüssigungsphase (Expansionsprozeß) kann ebenso eine handelsübliche Kältemaschine oder ein handelsüblicher Kältekompressor eingesetzt werden

4. Eine Methode basierend auf Schutzansprüchen 1 bis 3, bei dem jeder Reaktionsbehälter für sich autark, als auch im Verbund mit weiteren Reaktionsbehältern synchronisiert alle **Funktionen** gemäß Schutzanspruch 1 & 2 ausübt

5. Eine Methode basierend auf den Schutzansprüchen 1 bis 4, bei dem die Reaktionsbehälter einzeln und autark oder im Verbund von außen durch die Wandung der Reaktionsbehälter hindurch mit einem oder mehreren thermalen Leistungsträgern von über **+0°C** in Kontakt gebracht werden

6. Eine Methode basierend auf den Schutzansprüchen 1 bis 4, bei dem der Reaktionsbehälter durch eine Doppelmantelbeheizung thermisch beladen und beheizt wird, und der thermale Leistungsträger durch eine Doppelbemantelung geführt wird oder der Reaktionsbehälter im direkten Kontakt zum Thermalbad stehend angeordnet ist

7. Eine Methode basierend auf Schutzansprüche 1 bis 5, bei dem das eingesetzte hydraulische Medium, das in der 1. Kammer **"P1"** genutzt wird, zusätzlich durch technische und strömungstechnische Methoden gekühlt wird, um die Betriebstemperatur des eingesetzten hydraulischen Mediums vorzugshalber Hydrauliköl, wie es in der Schwerindustrie eingesetzt wird, nicht über **+80°C** ansteigen zu lassen

8. Eine Methode basierend auf Schutzansprüche 1 bis 5, bei dem die 1. Kammer **"P1"** des Reaktionsbehälters direkt durch die 2. Kammer **"P2"** unter Druck gesetzt wird

9. Eine Methode basierend auf Schutzanspruch 1 bis 3, bei dem das Arbeitsmedium vornehmlich Kältemittel **R410A** oder **CO₂** bzw. ein anderes Kältemittel/Triebmittel nach eigenen Erkenntnissen, wie z.B. 80% Methanol + 2% Video90 + 8% NH3, in die 2. Kammer **"P2"** des Reaktionsbehälters eingebracht wird.

10. Eine Methode basierend auf Schutzanspruch 1 bis 3, bei dem das jeweilige Arbeitsmedium, vornehmlich Kältemittel **R410A** oder **CO₂** bzw. anderes Kältemittel/Triebmittel nach eigenen Erkenntnissen, mit Hilfe einer technischen Vorrichtung **(Selbsteinspritzung)** in die 2. Kammer **"P2"** des Reaktionsbehälters (Kreislauf für das Arbeitsmedium) mit Hochdruck eingebracht wird

11. Eine Methode basierend auf Schutzanspruch 1 bis 3, bei dem der Reaktionsbehälter für die Druckunterstützung einzeln autark oder in Gruppen durchgehend ganz oder teilweise mit thermischer Leistung in Kontakt gebracht wird

12. Eine Methode basierend auf Schutzanspruch 1 bis 3, bei dem die 1. Kammer **"P1"** (hydraulischer Kreislauf) des Reaktionsbehälter an einem Ventil mit 2 oder mehr Schaltausgängen, vorzugshalber die Zu,- Ablaufleitungen mit Einzelventilen, und jeweils 1 Schaltausgang verbunden ist.

13. Eine Methode basierend auf Schutzanspruch 1 bis 3, bei dem die 2. Kammer **"P2"** (Triebmittelkreislauf) der Reaktionsbehälter an einem Ventil mit 2 oder mehr Schaltausgängen, vorzugshalber die Zu,- Ablaufleitungen mit Einzelventilen, und jeweils 1 Schaltausgang verbunden ist.

14. Eine Methode basierend auf Schutzanspruch 1 bis 3, bei dem die thermische Leistung speziell für diese technische Einrichtung aus jeder beliebigen Wärmequelle stammen kann, die durch technische und strömungstechnische Methoden mehr als **+1°C** aufweist.

15. Eine Methode basierend auf Schutzanspruch 1 bis 14, bei dem die aktive logische elektrische Steuerung der Einzelelemente für sich alleine, oder die logische Steuerung den Verbund der Reaktionsbehälter in einer zusammengefaßten intelligenten Steuerung, vorzugshalber durch eine SPS, in Anspruch genommen wird, die alle Belange der Wandlung von thermischer Energie in mechanische Energie in Form von Steuerungsanweisungen übersetzt und deren Überwachung übernimmt.
